# EUROPEAN PATENT SPECIFICATION

(11) **EP 2 081 078 B1**
(45) Date of publication and mention of the grant of the patent: **14.09.2011**
(21) Application number: 08169753.4
(22) Date of filing: 24.11.2008
(51) Int. Cl.: G02F 1/13357

(54) **Display device**
Anzeigevorrichtung
Dispositif d'affichage

(30) Priority: 09.01.2008 KR 20080002570
(43) Date of publication of application: 22.07.2009
(73) Proprietor: Samsung SDI Co., Ltd., Suwon-si Gyeonggi-do (KR)
(72) Inventor: Kim, Yun-Hee, Gyeonggi-do (KR); Yoo, Seung-Joon, Gyeonggi-do (KR); Park, Zin-Min, Gyeonggi-do (KR); Kang, Jung-Ho, Gyeonggi-do (KR); Lee, Su-Kyung, Gyeonggi-do (KR); Min, Da-Ki, Gyeonggi-do (KR); Jung, Ji-Ryong, Gyeonggi-do (KR); Lee, Won-Il, Gyeonggi-do (KR)
(74) Representative: Hengelhaupt, Jürgen

(56) References cited:
- WO-A-2008/002320
- US-A- 5 760 858
- US-A1- 2002 126 078
- US-A1- 2004 218 115
- US-A1- 2006 050 198
- US-A1- 2007 171 186

## Description

### BACKGROUND OF THE INVENTION

### 1. Field of the Invention

The present invention relates to display devices. More particularly, the invention is directed to a light emitting panel disposed at the rear of a display panel and provides light to the display panel.

### 2. Description of the Related Art

Among light emitting panels used as light sources of display devices, light emitting panels using field emission characteristics are known. Such a light emitting panel includes a phosphor layer and an anode electrode on an inner surface of a front substrate, and also includes electron emission regions and driving electrodes on an inner surface of a rear substrate. The edges of the front substrate and the rear substrate are bonded by a sealing member, and the internal space between the substrates is evacuated to form a vacuum container together with the sealing member.

The electron emission regions emit electrons toward the phosphor layer, and the electrons excite the phosphor layer to emit visible light. The anode electrode receives a high voltage of about 10kV or higher, and serves as an acceleration electrode that attracts electron beams to the phosphor layer. In order to provide white light to the display panel, the phosphor layer of the light emitting panel may include a mixture red, green, and blue phosphors provided in a certain ratio.

In the display device, a color reproduction range and color purity of the screen are determined by the emission spectrum of the light emitting panel and the transmission spectrum of the color filters of the display panel. That is, as the light emitting panel emits light of a higher strength from red, green, and blue wavelength regions, and as the color filters have higher transmittance characteristics at the red, green, and blue wavelength regions, the color reproduction range and color purity of the screen can be further improved. Exemplary embodiments of display devices of the prior art are disclosed in WO 2008/002320 A1 and US 2006/0050198. WO 2008/002320 discloses a display device as recited in the pre-characterising portion of claim 1.

However, in light emitting panels, a relatively high strength of light is emitted at wavelength regions other than the red, green, and blue regions, so increases in the color reproduction range and the color purity of the screen image are difficult to achieve.

The above information disclosed in this Background section is presented only to provide a background for the invention, and therefore may contain information that is not prior art to this application.

### SUMMARY OF THE INVENTION

The present invention provides a display device as defined in the claims.

According to one embodiment of the present invention, a display device includes a display panel and a light emitting panel at a rear of the display panel to provide light to the display panel and improve the color reproduction range and color purity of the screen image.

In an exemplary embodiment of the present invention, a display device includes a display panel that displays an image, and a light emitting panel that provides light to the display panel. The light emitting panel includes first and second substrates facing each other, an electron emission unit on an inner surface of the first substrate and including electron emission regions and driving electrodes, a light emission unit on an inner surface of the second substrate and including an anode electrode and a phosphor layer, and a filter layer on either the inner surface or outer surface of the second substrate for selectively absorbing light in wavelength bands ranging from 480nm to 500nm and from 580nm to 600nm.

The filter layer comprises a mixture of a first colorant that absorbs light in a wavelength band ranging from 480nm to 500nm, and a second colorant that absorbs light in a wavelength band ranging from 580nm to 600nm.

The first colorant may be selected from organic pigments, inorganic pigments, metallic complexes, and any combination thereof that absorbs light in the wavelength band ranging from 480nm to 500nm. Nonlimiting examples of suitable materials for the first colorant include quinoline blue, blue cyanine pigments, phthalocyanine-based blue pigments, and combinations thereof.

The second colorant may be selected from organic pigments, inorganic pigments, metallic complexes, and any combination thereof that absorbs light in the wavelength band ranging from 580nm to 600nm. Nonlimiting examples of suitable materials for the second colorant include anthraquinone-based red pigments, pyrocholine-based red pigments, quinacridone-based red pigments, beta naphthol-based azo lake red pigments, and combinations thereof.

The filter layer may contain the first colorant in an amount ranging from 0.1 to 20 parts by weight, and the second colorant in an amount ranging from 0.1 to 20 parts by weight.

The filter layer further includes a color correction colorant selected from carbon-based materials, organic pigments, inorganic pigments, and combinations thereof. The carbon-based material may be selected from carbon black, graphite, and combinations thereof. The organic pigment may be selected from yellow series, blue series, purple series, and combinations thereof. The inorganic pigment may be selected from TiO, TiN, TiO₁₋ₓNₓ (0<x<1), TiC, TiN-TiC, cobalt oxide, zinc oxide, iron oxide, ruthenium oxide, aluminum oxide, and combinations thereof.

The driving electrodes may include cathode electrodes and gate electrodes intersecting the cathode electrodes, and the electron emission regions may be electrically connected to the cathode electrodes. The driving electrodes may include first electrodes and second electrodes intersecting the first electrodes, first and second conductive layers may be connected to the first and second electrodes, and the electron emission regions may be positioned between the first and second conductive layers.

The phosphor layer may be formed as a white phosphor in which red, green, and blue phosphors are mixed. The red phosphor may be selected from Y₂O₃:Eu, Y₂O₂S:Eu, SrTiO₃:Pr, and combinations thereof. The green phosphor may be selected from Y₂SiO₅:Tb, Gd₂O₂S:Tb, ZnS:(Cu, Al), ZnSiO₄:Mn Zn(Ga, Al)₂O₄:Mn, and combinations thereof. The blue phosphor may be selected from ZnS:(Ag, Al), Y₂SiO₅:Ce, BaMgAl₁₀O₁₇:Eu, and combinations thereof.

The phosphor layer may contain the red phosphor in an amount ranging from 15 to 30 parts by weight, the green phosphor in an amount ranging from 30 to 60 parts by weight, and the blue phosphor in an amount ranging from 24 to 45 parts by weight. The display panel may include first pixels. The light emitting panel may include second pixels that are smaller than the first pixels of the display panel, and the second pixels may independently emit light according to gray scales of the corresponding first pixels. The display panel may be a liquid crystal display panel.

### BRIEF DESCRIPTION OF THE DRAWINGS

FIG. 1 is an exploded perspective view of a display device according to an exemplary embodiment of the present invention.
FIG. 2 is a partial cross-sectional view of the display panel of FIG. 1.
FIG. 3 is a partial exploded perspective view of the light emitting panel of FIG. 1.
FIG. 4 is a partial cross-sectional view of the light emitting panel of FIG. 1.
FIG. 5 is a partial cross-sectional view of a light emitting panel according to another exemplary embodiment of the present invention.
FIG. 6 is a partial top plan view of an electron emission unit in the light emitting panel of FIG. 5.
FIG. 7 is a graph of the emission spectrum of the light emitting panel fabricated according to Comparative Example 1.
FIG. 8 is a graph of the emission spectrum of the light emitting panel fabricated according to Reference Example 1.
FIG. 9 is a graph of the emission spectrum of the light emitting panel fabricated according to Reference Example 2.

### DETAILED DESCRIPTION

The present invention will now be described with reference to the accompanying drawings, in which exemplary embodiments of the invention are shown. As those skilled in the art would realize, the described embodiments may be modified in various different ways without departing from the scope of the present invention.

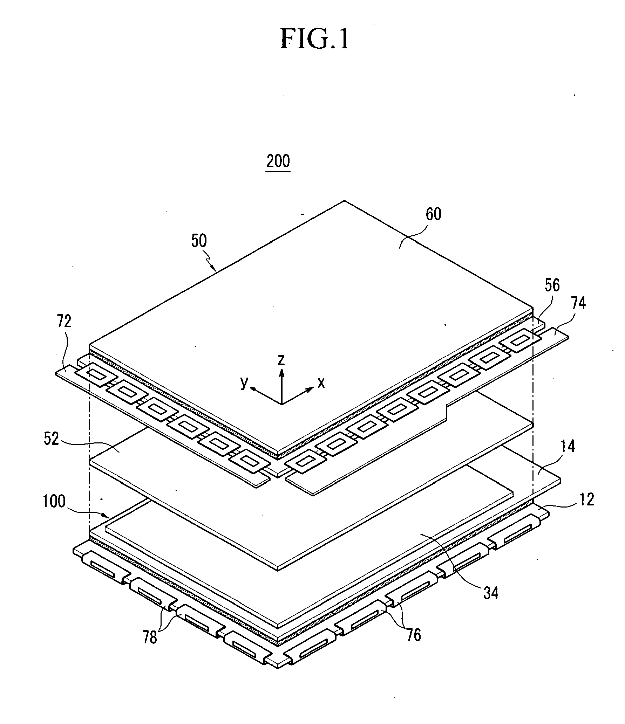

FIG. 1 is an exploded perspective view of a display device according to an exemplary embodiment of the present invention. With reference to FIG. 1, a display device 200 according to an exemplary embodiment includes a light emitting panel 100 and a display panel 50 at the front of the light emitting panel 100. A light diffuser 52 for evenly diffusing light emitted from the light emitting panel 100 may be positioned between the light emitting panel 100 and the display panel 50. The light emitting panel 100 and the light diffuser 52 may be spaced apart from each other.

The display panel 50 may be a liquid crystal display panel or a non-self-luminous display panel. In the following description, the display panel 50 is a liquid crystal display panel.

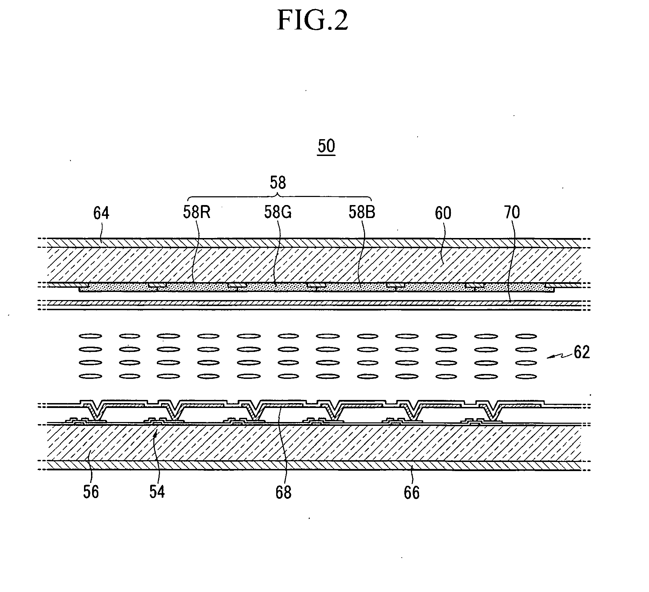

FIG. 2 is a partial cross-sectional view of the display panel of FIG. 1. With reference to FIG. 2, the display panel 50 include lower substrate 56 with a plurality of thin film transistors (TFTs) 54 formed thereon, an upper substrate 60 with color filter layers 58 formed thereon, and a liquid crystal layer 62 between the lower substrate 56 and upper substrate 60. Polarizers 64 and 66 are attached on an upper surface of the upper substrate 60 and a lower surface of the lower substrate 56, respectively, to polarize light that passes through the display panel 50.

Transparent pixel electrodes 68 are positioned on an inner surface of the lower substrate 56, and the color filter layers 58 and a transparent common electrode 70 are positioned on an inner surface of the upper substrate 60. The transparent pixel electrodes 68 form sub-pixels and are adapted to be driven by the corresponding TFTs 54. The color filter layers 58 include a red filter layer 58R, a green filter layer 58G, and a blue filter layer 58B individually positioned at each sub-pixel.

When a TFT 54 of a particular sub-pixel is turned on, an electric field is generated between the pixel electrodes 68 and the common electrode 70. This electric field alters the orientation (angle) of the liquid crystal molecules, and light transmittance varies according to the altered orientation (angle) of the liquid crystal molecules. In the display panel 50, the luminance and light emission color of each pixel can be controlled through this process.

Reference numeral 72 in FIG. 1 designates a gate circuit board assembly that transmits a gate drive signal to the gate electrodes of the TFTs 54. Reference numeral 74 denotes a data circuit board assembly that transmits a data drive signal to the source electrodes of the TFTs 54.

With reference to FIG. 1, the light emitting panel 100 includes a smaller number of pixels than that of the display panel 50 so that one pixel of the light emitting panel 100 corresponds to two or more pixels of the display panel 50. Each pixel of the light emitting panel 100 may emit light to correspond to the highest gray scale of the pixels of the display panel 50, and may express 2- bit to 8-bit gray scales.

For the sake of convenience, the pixels of the display panel 50 will be referred to as first pixels, those of the light emitting panel 100 will be referred to as second pixels, and the first pixels corresponding to a single second pixel will be referred to as a first pixel group.

The driving process of the light emitting panel 100 may include: ① detecting (by a signal controller (not shown) that controls the display panel 50) the highest gray scale of the gray scales of the first pixels in the first pixel group, ② calculating a gray scale required for light emission of the second pixels according to the detected gray scale and converting the same into digital data, ③ generating a drive signal of the light emitting panel 100 using the digital data, and ④ applying the generated drive signal to driving electrodes of the light emitting panel 100.

The drive signal of the light emitting panel 100 includes a scan drive signal and a data drive signal. The light emitting panel 100 may include cathode electrodes (not shown) and gate electrodes (not shown) as driving electrodes. Either of the cathode electrodes and the gate electrodes, for example the gate electrode, receives the scan drive signal, and the other, for example the cathode electrode, receives the data drive signal. The scan circuit board assembly and the data circuit board assembly for driving the light emitting panel 100 may be positioned on the rear of the light emitting panel 100. In FIG. 1, reference numeral 76 designates first connectors that connect the cathode electrodes and the data circuit board assembly, and reference numeral 78 designates second connectors that connect the gate electrodes and the scan circuit board assembly.

When an image is displayed at a corresponding first pixel group, each second pixel of the light emitting panel 100 is synchronized with a first pixel group and emits light with a certain gray scale. That is, the light emitting panel 100 provides light of high luminance to a brighter region of the screen image implemented by the display panel 50 and provides light of low luminance to a darker region. Accordingly, the display device 200 increases the contrast ratio of the screen and implements sharp picture quality.

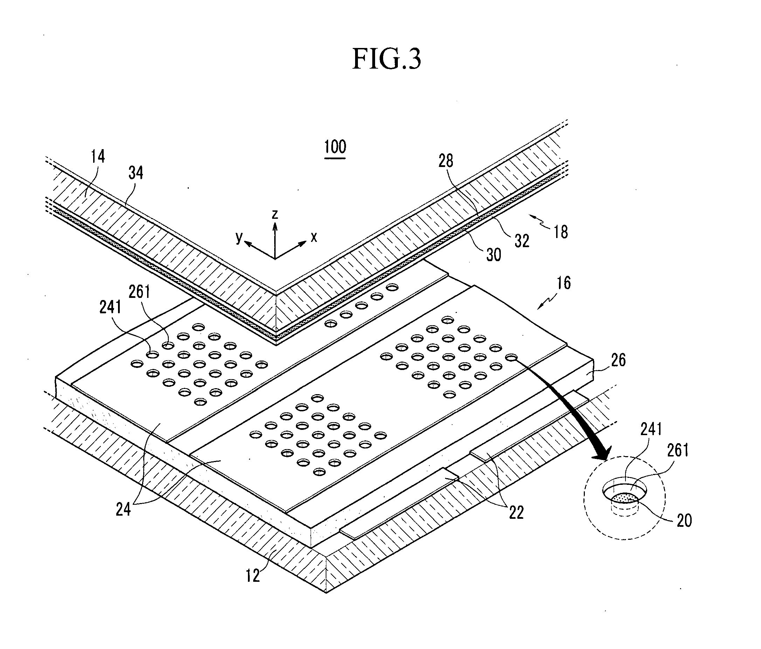

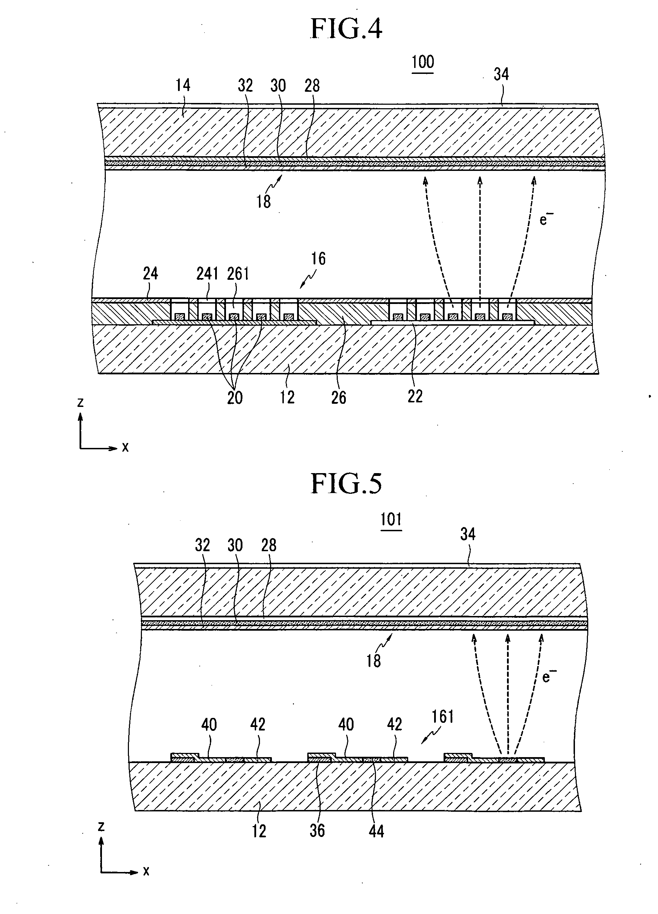

FIG. 3 is a partial exploded perspective view of the light emitting panel of FIG. 1, and FIG. 4 is a partial cross-sectional view of the light emitting panel of FIG. 1. With reference to FIGs. 3 and 4, the light emitting panel 100 includes first and second substrates 12 and 14 facing each other and separated by a distance. Sealing members (not shown) are positioned at the edges of the first and second substrates 12 and 14 to attach the substrates 12 and 14. The internal space between the substrates 12 and 13 is evacuated at a vacuum degree of 10⁻⁶ Torr, thereby creating a vacuum container between the substrates 12 and 14 and sealing members.

The area on each of the first and second substrates 12 and 14 lying inside the sealing members may be divided into an active area (contributing to actual emission of visible light) and a non-active area (surrounding the active area). An electron emission unit 16 for emitting electrons is positioned on the inner surface and in the active area of the first substrate 12, and a light emission unit 18 for emitting visible light is positioned on the inner surface and in the active area of the second substrate 14. The second substrate 14, where the light emission unit 18 is positioned, may become the front substrate of the light emitting panel 100.

The electron emission unit 16 includes electron emission regions 20 and driving electrodes that control the amount of electron emission from the electron emission regions 20. The driving electrodes include cathode electrodes 22 formed in a stripe pattern along one direction (y-axis direction in FIG. 3) of the first substrate 12, and gate electrodes 24 formed on top of the cathode electrodes 22 in a stripe pattern along a direction that intersects the cathode electrodes 22 (x-axis direction in FIG. 3). An insulation layer 26 is positioned between the cathode electrodes 22 and the gate electrodes 24.

Where the gate electrodes and cathode electrodes intersect, openings 241 are formed in the gate electrodes 24 and openings 261 are formed in the insulation layer 26, exposing portions of the surface of the cathode electrodes 22. The electron emission regions 20 are positioned on the cathode electrodes 22 in the openings 261 of the insulation layer 26.

The electron emission regions 20 may include materials such as carbon-based materials or nanometer-sized materials that emit electrons when an electric field is applied in a vacuum state. Nonlimiting examples of materials suitable for the electron emission regions 20 include carbon nanotubes, graphite, graphite nanofiber, diamond, diamond-like carbon, fullerene, silicon nanowire, and combinations thereof.

Also, the electron emission regions may be formed as a tip structure having a pointed front end that is made of molybdenum (Mo) or silicon (Si), etc., as a primary material.

In the above-described structure, a single intersection of a cathode electrode 22 and a gate electrode 24 may correspond to a single pixel area of the light emitting panel 100. Alternatively, two or more intersections may correspond to a single pixel area of the light emitting panel 100.

The light emission unit 18 includes an anode electrode 28, a phosphor layer 30 positioned on one surface of the anode electrode 28, and a reflective layer 32 covering the phosphor layer 30. The anode electrode 28 receives an anode voltage from a power source unit (not shown) outside of the vacuum container, and maintains the phosphor layer 30 in a high potential state. The anode electrode 28 may be made of a transparent conductive material such as ITO (indium tin oxide) to allow visible light radiated from the phosphor layer 30 to be transmitted therethrough.

The reflective layer 32 may be made of aluminum. The reflective layer may be thin (i.e., a thickness of thousands of angstroms (A)), and include fine holes for allowing passage of electron beams. The reflective layer 32 reflects visible light, which has been radiated from the phosphor layer 30 to the first substrate 12, toward the second substrate 14 to thereby increase the luminance of the light emitting panel 100. The anode electrode 28 may be omitted, and instead, the reflective layer 32 may serve as the anode electrode upon receiving the anode voltage.

In one exemplary embodiment, the phosphor layer 30 is a white phosphor in which red, green, and blue phosphors are mixed. The red phosphor may be selected from Y₂O₃:Eu, Y₂O₂S:Eu, SrTiO₃:Pr, and combinations thereof. The green phosphor may be selected from Y₂SiO₅:Tb, Gd₂O₂S:Tb, ZnS:(Cu, Al), ZnSiO₄:Mn Zn(Ga, Al)₂O₄:Mn, and combinations thereof. The blue phosphor may be selected from ZnS:(Ag, Al), Y₂SiO₅:Ce, BaMgAl₁₀O₁₇:Eu, and combinations thereof.

The phosphor layer 30 may include the red phosphor in an amount ranging from about 15 to about 30 parts by weight, the green phosphor in an amount ranging from about 30 to about 60 parts by weight, and the blue phosphor in an amount ranging from about 24 to about 45 parts by weight.

The light emitting panel 100 according to one exemplary embodiment includes a filter layer 34 that selectively absorbs light in a particular wavelength band of white light emitted from the phosphor layer 30. The filter layer 34 is positioned on a surface of the second substrate 14 and selectively absorbs light in a wavelength band ranging from about 480nm to about 500nm and a wavelength band ranging from about 580nm to about 600nm. In FIGs. 3 and 4, the filter layer 34 is positioned on an outer surface of the second substrate 14.

The filter layer 34 includes a first colorant that absorbs light in a wavelength band ranging from about 480nm to about 500nm and a second colorant that absorbs light in a wavelength band ranging from about 580nm to about 600nm.

The first colorant may be selected from organic pigments, inorganic pigments, metallic complexes, and combinations thereof that can absorb light in the wavelength band ranging from about 480nm to about 500nm. In particular, the first colorant may be selected from quinoline blue, blue cyanine pigments, phthalocyanine-based blue pigments, and combinations thereof.

The second colorant may be selected from organic pigments, inorganic pigments, metallic complexes, and combinations thereof that can absorb light in the wavelength band ranging from about 580nm to about 600nm. In particular, the second colorant may be selected from anthraquinone-based red pigments, pyrocholine-based red pigments, quinacridone-based red pigments, beta naphthol-based azo lake red pigments, and combinations thereof.

Each of the first and second colorants are present in an amount ranging from about 0.1 to about 20 parts by weight in the filter layer 34. In one embodiment, for example, each of the first and second colorants may be present in an amount ranging from about 1 to about 5 parts by weight. When each of the first and second colorants are present in amounts within these ranges in the filter layer 34, losses of transmittance of visible light can be minimized and color purity can be increased.

The filter layer 34 further includes a color correction colorant. The color correction colorant is selected from carbon-based materials, organic pigments, inorganic pigments, and combinations thereof. The carbon-based material may be selected from carbon black, graphite, and combinations thereof. The organic pigment may be selected from yellow series, blue series, purple series, and combinations thereof. The inorganic pigment may be selected from TiO, TiN, TiO₁₋ₓNₓ (0<x<1), TiC, TiN-TiC, cobalt oxide, zinc oxide, iron oxide, ruthenium oxide, aluminum oxide, and combinations thereof.

The color correction colorant serves to adjust the transmittance and the color sense of the filter layer 34. The content of the color correction colorant may be adjusted according to the transmittance of the anode electrode 28, and an organic pigment of high color purity may be used.

The filter layer 34 may be fabricated by any method commonly used in the art, for example vacuum deposition, sputtering, wet coating, etc.

In the light emitting panel 100 having the structure described above, a single intersection of the cathode electrode 22 and the gate electrode 24 may correspond to a single pixel area of the light emitting panel 100. Alternatively, two or more intersections may correspond to a single pixel area of the light emitting panel 100.

The light emitting panel 100 is driven by applying a scan voltage to either of the cathode electrodes 22 or the gate electrodes 24, applying a data voltage to the other electrodes, and applying a DC voltage (anode voltage) of 10kV or higher to the anode electrode 28. Then, an electric field is generated around the electron emission regions 20 at pixels in which a voltage difference between the cathode electrodes 22 and the gate electrodes 24 is larger than a threshold value to emit electrons. The emitted electrons are attracted by the anode voltage to collide with the corresponding phosphor layer 30 to emit light. The strength of light emission of the phosphor layer 30 of each pixel corresponds to an amount of emission of electron beams of the corresponding pixels.

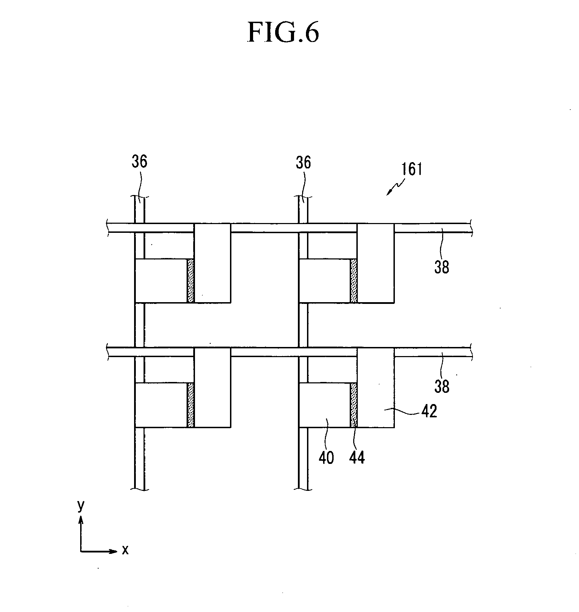

FIG. 5 is a partial cross-sectional view of a light emitting panel according to another embodiment of the present invention, and FIG. 6 is a partial top plan view of the electron emission unit in the light emitting panel of FIG. 5. With reference to FIGs. 5 and 6, the light emitting panel 101 has a similar configuration as that of the embodiment shown in FIG. 3, except for the structure of the electron emission unit 161. The same reference numerals are used for like elements in the embodiment shown in FIG. 3.

The light emitting panel 101 includes a first electrode 36, a second electrode 38 intersecting the first electrode 36 and insulated from the first electrode 36, a first conductive layer 40 electrically connected to the first electrode 36, a second conductive layer 42 electrically connected to the second electrode 38 and spaced apart from the first conductive layer 40, and an electron emission region 44 between the first and second conductive layers 40 and 42.

The electron emission region 44 may be formed as an arbitrary layer including a carbon-based material. In this case, the electron emission region 44 may include a material selected from carbon nanotubes, graphite, graphite nanofiber, diamond-like carbon, fullerene, and combinations thereof. The electron emission region 44 may exist as a fine crack positioned between the first and second conductive layers 40 and 42. As shown in FIGs. 5 and 6, the electron emission region 44 is formed as an arbitrary layer including a carbon-based material.

In the above-described configuration, when a driving voltage is applied to the first and second electrodes 36 and 38, current flows across the first and second conductive layers 40 and 42 in a direction parallel to the surface of the electron emission region 44, and surface-conductive electrons are emitted from the electron emission regions 44.

Exemplary embodiments of the present invention and a comparative example will now be described. The Examples are presented for illustrative purposes only and do not limit the scope of the present invention.

### Fabrication of the Light Emitting Panel

### Exemplary Embodiment 1

0.17g of polyvinyl alcohol was input to 100g pure water according to a general method. A phthalocyanine-based blue pigment (Cu complex) as a first colorant (for selectively absorbing light in a wavelength band ranging from about 480nm to about 500nm) and an anthraquinone-based red pigment as a second colorant (for selectively absorbing light in a wavelength band ranging from about 580nm to 600nm) were added in a weight ratio of 1:1. The resultant material was reacted for one minute at 40°C and then dried at 100°C to fabricate a filter layer.

Cathode electrodes and gate electrodes were formed on a first substrate. A composition for forming electron emission regions including carbon nanotubes was coated on the cathode electrodes and then baked for 20 minutes at 500°C to fabricate electron emission regions. An anode electrode was formed on a second substrate. A phosphor layer was formed on the anode electrode using a white phosphor fabricated by mixing 23.8 parts by weight of a Y₂O₃:Eu red phosphor, 36.2 parts by weight of a ZnS:(Cu, Al) green phosphor, and 40.0 parts by weight of a ZnS:(Ag, Al) blue phosphor. A reflective layer was formed by chemical-vapor-depositing Al and baking for one hour at 480°C. The fabricated first and second substrates were bonded together, and the previously fabricated filter layer was attached onto an outer surface of the second substrate using an acrylic resin to fabricate a light emitting panel.

### Exemplary Embodiment 2

A light emitting panel was fabricated as in Exemplary Embodiment 1, except that quinoline blue was used as the first colorant for selectively absorbing light in the wavelength band ranging from about 480nm to about 500nm, and a pyrocholine-based red pigment was used as the second colorant for selectively absorbing light in the wavelength band ranging from about 580nm to about 600nm.

### Exemplary Embodiment 3

A light emitting panel was fabricated as in Exemplary Embodiment 1, except that a blue cyanine pigment was used as the first colorant for selectively absorbing light in the wavelength band ranging from about 480nm to about 500nm, and a beta naphthol-based azo lake red pigment was used as the second colorant for selectively absorbing light in the wavelength band ranging from about 580nm to about 600nm.

### Exemplary Embodiment 4

A light emitting panel was fabricated as in Exemplary Embodiment 1, except that a phthalocyanine-based blue pigment (Cu complex) was used as the first colorant for selectively absorbing light in the wavelength band ranging from about 480nm to about 500nm, and a quinacridone-based red pigment was used as the second colorant for selectively absorbing light in the wavelength band ranging from about 580nm to about 600nm.

### Exemplary Embodiment 5

A light emitting panel was fabricated as in Exemplary Embodiment 1, except that the first colorant for selectively absorbing light in the wavelength band ranging from about 480nm to about 500nm and the second colorant for selectively absorbing light in the wavelength band ranging from about 580nm to about 600nm were mixed in a weight ratio of 1.5:1.

### Exemplary Embodiment 6

A light emitting panel was fabricated as in Exemplary Embodiment 1, except that the first colorant for selectively absorbing light in the wavelength band ranging from about 480nm to about 500nm and the second colorant for selectively absorbing light in the wavelength band ranging from about 580nm to about 600nm were mixed in a weight ratio of 2:1.

### Exemplary Embodiment 7

A light emitting panel was fabricated as in Exemplary Embodiment 1, except that the first colorant for selectively absorbing light in the wavelength band ranging from about 480nm to about 500nm and the second colorant for selectively absorbing light in the wavelength band ranging from about 580nm to about 600nm were mixed in a weight ratio of 1:2.

### Exemplary Embodiment 8

A light emitting panel was fabricated as in Exemplary Embodiment 1, except that the first colorant for selectively absorbing light in the wavelength band ranging from about 480nm to about 500nm and the second colorant for selectively absorbing light in the wavelength band ranging from about 580nm to about 600nm were mixed in a weight ratio of 1:3.

### Reference Example 1

A light emitting panel was fabricated as in Exemplary Embodiment 1, except that the filter layer was fabricated to include only the first colorant for selectively absorbing light in the wavelength band ranging from about 480nm to about 500nm.

### Reference Example 2

A light emitting panel was fabricated as in Exemplary Embodiment 1, except that the filter layer was fabricated to include only the second colorant for selectively absorbing light in the wavelength band ranging from about 580nm to about 600nm.

### Comparative Example 1

A light emitting panel was fabricated as in Exemplary Embodiment 1, except that the light emitting panel did not have a filter layer.

### Measurement of Absorption Spectrum

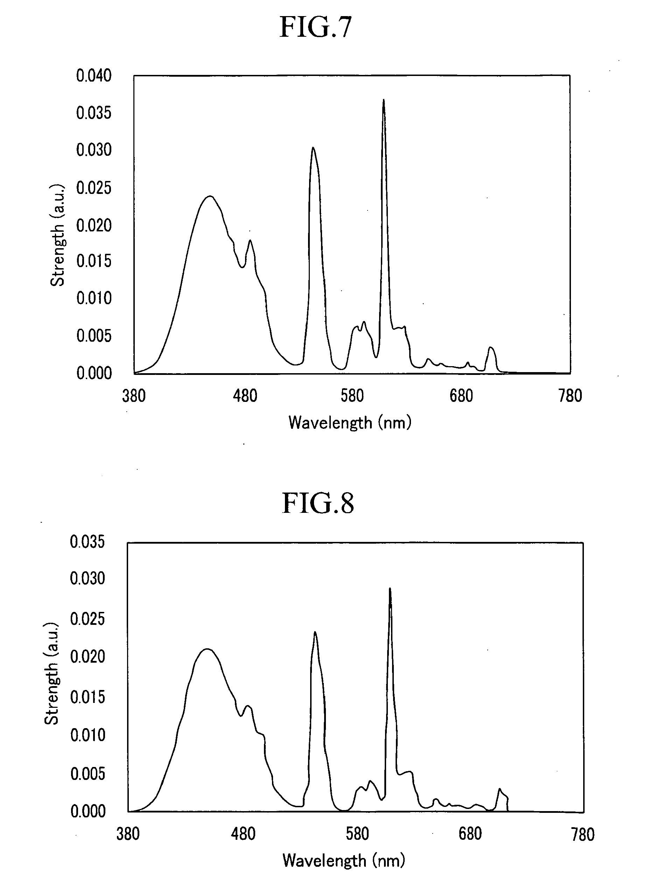

An emission spectrum of the light emitting panel fabricated according to Comparative Example 1 was measured based on light emitted from a front surface of the light emitting panel with the phosphor layer using a spectrometer (CAS GALILEO Co. SR-3®), and the results are shown in FIG. 7. Emission spectrums of the light emitting panels fabricated according to Reference Examples 1 and 2 were also measured, and the results are shown in FIG.s 8 and 9.

With reference to FIG. 7, it is noted that light of a relatively high strength was emitted at the wavelength bands of about 490nm and 590nm.

With reference to FIG. 8, it is noted that because the light emitting panel according to Reference Example 1 includes a filter layer having the first colorant for selectively absorbing light in the wavelength band ranging from about 480nm to about 500nm, the peak of light emission was reduced at the wavelength band of about 490nm.

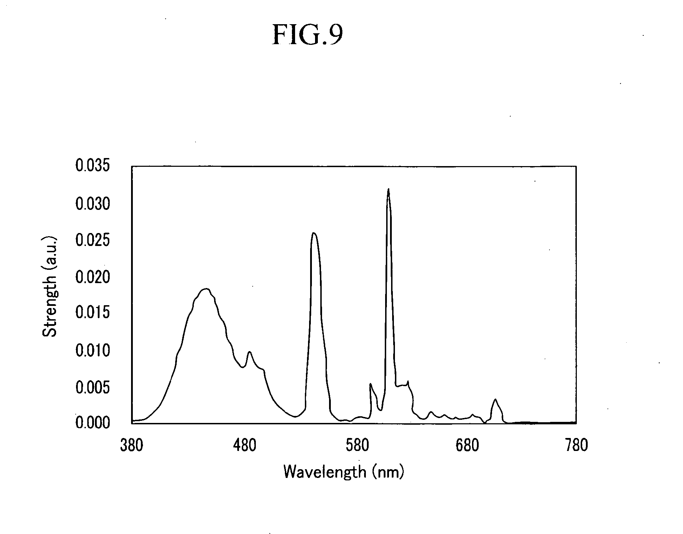

With reference to FIG. 9, it is noted that because the light emitting panel according to Reference Example 2 includes the filter layer having the second colorant for selectively absorbing light in the wavelength band ranging from about 580nm to about 600nm, the peak of light emission was reduced at the wavelength band of about 590nm.

## Claims

1. A display device (200) comprising
a display panel (50) for displaying an image, and
a light emitting panel (100, 101) for providing light to the display panel (50), wherein the light emitting panel (100, 101) comprises:
first (12) and second (14) substrates facing each other;
an electron emission unit (16) on a first surface of the first substrate (12) and comprising electron emission regions (20, 44) and driving electrodes;
a light emission unit (18) on a first surface of the second substrate (14) and comprising an anode electrode (28) and a phosphor layer (30); and
a filter layer (34) on a surface of the second substrate (14);
**characterized in that**
the filter layer (34) comprises a mixture of a first colorant and a second colorant for absorbing light in a wavelength band ranging from 480nm to 500nm and in a wavelength band ranging from 580nm to 600nm, respectively; and
the filter layer (34) further comprises a color correction colorant selected from the group consisting of:
carbon-based materials selected from the group consisting of carbon black, graphite, and combinations thereof;
organic pigments selected from the group consisting of yellow series, blue series, purple series, and combinations thereof;
inorganic pigments selected from the group consisting of TiO, TiN, TiO₁₋ₓNₓ (0<x<1), TiC, TiN-TiC, cobalt oxide, zinc oxide, iron oxide, ruthenium oxide, aluminum oxide, and combinations thereof; and
combinations thereof.

2. The display device (200) of claim 1, wherein the first colorant is selected from the group consisting of organic pigments, inorganic pigments, metallic complexes, and combinations thereof.

3. The display device (200) of claim 1 or 2, wherein the first colorant is selected from the group consisting of quinoline blue, blue cyanine pigments, phthalocyanine-based blue pigments, and combinations thereof.

4. The display device (200) of any of claims 1 to 3, wherein the second colorant is selected from the group consisting of organic pigments, inorganic pigments, metallic complexes, and combinations thereof.

5. The display device (200) of any of claims 1 to 4, wherein the second colorant is selected from the group consisting of anthraquinone-based red pigments, pyrocholine-based red pigments, quinacridone-based red pigments, beta naphthol-based azo lake red pigments, and combinations thereof.

6. The display device (200) of any of claims 1 to 5, wherein the first colorant is present in the filter layer (34) in an amount ranging from 0.1 to 20 parts by weight, and the second colorant is present in the filter layer (34) in an amount ranging from 0.1 to 20 parts by weight.

7. The display device (200) of any of claims 1 to 6, wherein the driving electrodes comprise cathode electrodes (22) and gate electrodes (24) intersecting the cathode electrodes (22), and wherein the electron emission regions (20) are electrically connected to the cathode electrodes (22).

8. The display device (200) of any of claims 1 to 6, wherein the driving electrodes comprise first electrodes (36) and second electrodes (38) intersecting the first electrodes (36), a first conductive layer (40) connected to the first electrodes (36), and a second conductive layer (42) connected to the second electrodes (38), and wherein the electron emission regions (44) are between the first (40) and second (42) conductive layers.

9. The display device (200) of any of claims 1 to 8, wherein the phosphor layer (30) is a white phosphor comprising a mixture of red, green, and blue phosphors.

10. The display device (200) of claim 9, wherein the red phosphor is selected from the group consisting of Y₂O₃:Eu, Y₂O₂S:Eu, SrTiO₃:Pr, and combinations thereof.

11. The display device (200) of claim 10 or 9, wherein the green phosphor is selected from the group consisting of Y₂SiO₅:Tb, Gd₂O₂S:Tb, ZnS:(Cu, Al), ZnSiO₄:Mn, Zn(Ga, Al)₂O₄:Mn, and combinations thereof.

12. The display device (200) of any of claims 9 to 11, wherein the blue phosphor is selected from the group consisting of ZnS:(Ag, Al), Y₂SiO₅:Ce, BaMgAl₁₀O₁₇:Eu, and combinations thereof.

13. The display device (200) of any of claims 9 to 12, wherein the phosphor layer (30) comprises a red phosphor in an amount ranging from 15 to 30 parts by weight, a green phosphor in an amount ranging from 30 to 60 parts by weight, and a blue phosphor in an amount ranging from 24 to 45 parts by weight.

14. The display device (200) of any of claims 1 to 13, wherein the display panel (50) comprises first pixels, the light emitting panel (100) comprises second pixels that are smaller than the first pixels of the display panel (50), and the second pixels independently emit light according to gray scales of corresponding first pixels.

15. The display device (200) of any of claims 1 to 14, wherein the display panel (50) is a liquid crystal display panel.

## Patentansprüche

1. Anzeigevorrichtung (200), umfassend:
eine Anzeigetafel (50) zum Anzeigen eines Bildes und
eine Licht aussendende Tafel (100, 101) zum Bereitstellen von Licht für die Anzeigetafel (50),
wobei die Licht aussendende Tafel (100, 101) umfasst:
erste (12) und zweite (14) Substrate, die zueinander weisen,
eine Elektronenemissionseinheit (16), die sich auf einer ersten Oberfläche des ersten Substrats (12) befindet und Elektronenemissionsbereiche (20, 44) und Steuerelektroden umfasst,
eine Lichtemissionseinheit (18), die sich auf einer ersten Oberfläche des zweiten Substrats (14) befindet und eine Anodenelektrode(28) und eine Phosphorschicht (30) umfasst, und
eine Filterschicht (34) auf einer Oberfläche des zweiten Substrats (14),
**dadurch gekennzeichnet, dass**
die Filterschicht (34) ein Gemisch aus einem ersten Farbstoff und einem zweiten Farbstoff zum Absorbieren von Licht in einem Wellenlängenbereich von 480 nm bis 500 nm bzw. in einem Wellenlängenbereich von 580 nm bis 600 nm umfasst und
die Filterschicht (34) ferner einen Farbkorrekturfarbstoff umfasst, ausgewählt aus der Gruppe bestehend aus:
Materialien auf Basis von Kohlenstoff, ausgewählt aus der Gruppe bestehend aus Ruß, Graphit und Kombinationen davon,
organischen Pigmenten, ausgewählt aus der Gruppe bestehend aus der Gelb-Reihe, Blau-Reihe, Violett-Reihe und Kombinationen davon,
anorganischen Pigmenten, ausgewählt aus der Gruppe bestehend aus TiO, TiN, TiO₁₋ₓNₓ (0<x<1), TiC, TiN-TiC, Cobaltoxid, Zinkoxid, Eisenoxid, Rutheniumoxid, Aluminiumoxid und Kombinationen davon, und
Kombinationen davon.

2. Anzeigevorrichtung (200) nach Anspruch 1, wobei der erste Farbstoff ausgewählt ist aus der Gruppe bestehend aus organischen Pigmenten, anorganischen Pigmenten, Metallkomplexen und Kombinationen davon.

3. Anzeigevorrichtung (200) nach Anspruch 1 oder 2, wobei der erste Farbstoff ausgewählt ist aus der Gruppe bestehend aus Chinolinblau, blauen Cyaninpigmenten, blauen Pigmenten auf Basis von Phthalocyanin und Kombinationen davon.

4. Anzeigevorrichtung (200) nach einem der Ansprüche 1 bis 3, wobei der zweite Farbstoff ausgewählt ist aus der Gruppe bestehend aus organischen Pigmenten, anorganischen Pigmenten, Metallkomplexen und Kombinationen davon.

5. Anzeigevorrichtung (200) nach einem der Ansprüche 1 bis 4, wobei der zweite Farbstoff ausgewählt ist aus der Gruppe bestehend aus roten Pigmenten auf Basis von Anthrachinon, roten Pigmenten auf Basis von Pyrocholin, roten Pigmenten auf Basis von Chinacridon, verlackte rote Azopigmente auf Basis von beta-Naphthol und Kombinationen davon.

6. Anzeigevorrichtung (200) nach einem der Ansprüche 1 bis 5, wobei der erste Farbstoff in der Filterschicht (34) in einer Menge im Bereich von 0,1 bis 20 Masseteilen vorhanden ist und der zweite Farbstoff in der Filterschicht (34) in einer Menge im Bereich von 0,1 bis 20 Masseteilen vorhanden ist.

7. Anzeigevorrichtung (200) nach einem der Ansprüche 1 bis 6, wobei die Steuerelektroden Kathodenelektroden (22) und die Kathodenelektroden (22) schneidende Gateelektroden (24) umfassen und wobei die Elektronenemissionsbereiche (20) mit den Kathodenelektroden (22) elektrisch verbunden sind.

8. Anzeigevorrichtung (200) nach einem der Ansprüche 1 bis 6, wobei die Steuerelektroden erste Elektroden (36) und die ersten Elektroden (36) kreuzende zweite Elektroden (38), eine mit den ersten Elektroden (36) verbundene erste leitfähige Schicht (40) und eine mit den zweiten Elektroden (38) verbundene zweite leitfähige Schicht (42) umfassen und wobei sich die Elektronenemissionsbereiche (44) zwischen den ersten (40) und zweiten (42) leitfähigen Schichten befinden.

9. Anzeigevorrichtung (200) nach einem der Ansprüche 1 bis 8, wobei die Phosphorschicht (30) ein weißer Phosphor ist, der ein Gemisch aus rotem, grünem und blauem Phosphor umfasst.

10. Anzeigevorrichtung (200) nach Anspruch 9, wobei der rote Phosphor ausgewählt ist aus der Gruppe bestehend aus Y₂O₃:Eu, Y₂O₂S:Eu, SrTiO₃:Pr und Kombinationen davon.

11. Anzeigevorrichtung (200) nach Anspruch 10 oder 9, wobei der grüne Phosphor ausgewählt ist aus der Gruppe bestehend aus Y₂SiO₅:Tb, Gd₂O₂S:Tb, ZnS:(Cu, Al), ZnSiO₄:Mn, Zn(Ga, Al)₂O₄:Mn und Kombinationen davon.

12. Anzeigevorrichtung (200) nach einem der Ansprüche 9 bis 11, wobei der blaue Phosphor ausgewählt ist aus der Gruppe bestehend aus ZnS:(Ag, Al), Y₂SiO₅:Ce, BaMgAl₁₀O₁₇:Eu und Kombinationen davon.

13. Anzeigevorrichtung (200) nach einem der Ansprüche 9 bis 12, wobei die Phosphorschicht (30) einen roten Phosphor in einer Menge im Bereich von 15 bis 30 Masseteilen, einen grünen Phosphor in einer Menge im Bereich von 30 bis 60 Masseteilen und einen blauen Phosphor in einer Menge im Bereich von 24 bis 45 Masseteilen umfasst.

14. Anzeigevorrichtung (200) nach einem der Ansprüche 1 bis 13, wobei die Anzeigetafel (50) erste Pixel umfasst, die Licht aussendende Tafel (100) zweite Pixel umfasst, die kleiner sind als die ersten Pixel der Anzeigetafel (50), und die zweiten Pixel gemäß den Grauwerten entsprechender erster Pixel unabhängig Licht aussenden.

15. Anzeigevorrichtung (200) nach einem der Ansprüche 1 bis 14, wobei die Anzeigetafel (50) eine Flüssigkristall-Anzeigetafel ist.

## Revendications

1. Dispositif d'affichage (200) comprenant :
un panneau d'affichage (50) destiné à afficher une image, et
un panneau électroluminescent (100, 101) destiné à fournir de la lumière au panneau d'affichage (50), dans lequel le panneau électroluminescent (100, 101) comprend :
un premier (12) et un second (14) substrats tournés l'un vers l'autre ;
une unité émettrice d'électrons (16) sur une première surface du premier substrat (12) et comprenant des régions émettrices d'électrons (20, 44) et des électrodes d'attaque ;
une unité électroluminescente (18) sur une première surface du second substrat (14) et comprenant une électrode d'anode (28) et une couche de luminophore (30) ; et
une couche de filtrage (34) sur une surface du second substrat (14) ;
**caractérisé en ce que**
la couche de filtrage (34) comprend un mélange d'un premier colorant et d'un second colorant destinés à absorber la lumière dans une gamme de longueurs d'onde allant de 480 nm à 500 nm et dans une gamme de longueurs d'onde allant de 580 nm à 500 nm, respectivement ; et **en ce que**
la couche de filtrage (34) comprend en outre un colorant de correction de couleur choisi dans le groupe constitué par :
des matériaux carbonés choisis dans le groupe constitué par le noir de carbone, le graphite, et des combinaisons de ceux-ci ;
des pigments inorganiques choisis dans le groupe constitué par TiO, TiN, TiO₁₋ₓNₓ (0<x<1), TiC, TiN-TiC, l'oxyde de cobalt, l'oxyde de zinc, l'oxyde de fer, l'oxyde de ruthénium, l'oxyde d'aluminium, et des combinaisons de ceux-ci ; et
des combinaisons de ceux-ci.

2. Dispositif d'affichage (200) selon la revendication 1, dans lequel le premier colorant est choisi dans le groupe constitué par des pigments organiques, des pigments inorganiques, des complexes métalliques, et des combinaisons de ceux-ci.

3. Dispositif d'affichage (200) selon la revendication 1 ou la revendication 2, dans lequel le premier colorant est choisi dans le groupe constitué par le bleu de quinoléine, les pigments bleus de cyanine, des pigments bleus à base de phtalocyanine, et des combinaisons de ceux-ci.

4. Dispositif d'affichage (200) selon l'une quelconque des revendication 1 à 3, dans lequel le second colorant est choisi dans le groupe constitué par des pigments organiques, des pigments inorganiques, des complexes métalliques, et des combinaisons de ceux-ci.

5. Dispositif d'affichage (200) selon l'une quelconque des revendications 1 à 4, dans lequel le second colorant est choisi dans le groupe constitué par des pigments rouges à base d'anthraquinone, des pigments rouges à base de pyrocholine, des pigments rouges à base de quinacridone, des pigments rouges de laque azoïque à base de béta-naphtol, et des combinaisons de ceux-ci.

6. Dispositif d'affichage (200) selon l'une quelconque des revendications 1 à 5, dans lequel le premier colorant est présent dans la couche de filtrage (34) dans une proportion allant de 0,1 à 20 parties en poids, et le second colorant est présent dans la couche de filtrage (34) dans une proportion allant de 0,1 à 20 parties en poids.

7. Dispositif d'affichage (200) selon l'une quelconque des revendications 1 à 6, dans lequel les électrodes d'attaque comprennent des électrodes de cathode (22) et des électrodes de grille (24) qui coupent les électrodes de cathode (22), et dans lequel les régions émettrices d'électrons (20) sont connectées électriquement aux électrodes de cathode (22).

8. Dispositif d'affichage (200) selon l'une quelconque des revendications 1 à 6, dans lequel les électrodes d'attaque comprennent des premières électrodes (36) et des secondes électrodes (28) qui coupent les premières électrodes (36), une première couche conductrice (40) connectée aux premières électrodes (36), et une seconde couche conductrice (42) connectée aux secondes électrodes (38), et dans lequel les régions émettrices d'électrons (44) se situent entre les première (40) et seconde (42) couches conductrices.

9. Dispositif d'affichage (200) selon l'une quelconque des revendications 1 à 8, dans lequel la couche de luminophore (30) est un luminophore blanc comprenant un mélange de luminophores rouges, verts et bleus.

10. Dispositif d'affichage (200) selon la revendication 9, dans lequel le luminophore rouge est choisi dans le groupe constitué de Y₂O₂:Eu, Y₂O₂S:Eu, SrTiO₃:Pr, et des combinaisons de ceux-ci.

11. Dispositif d'affichage (200) selon la revendications 10 ou 9, dans lequel le luminophore vert est choisi dans le groupe constitué de Y₂SiO₅:Tb, Gd₂O₂S:Tb, ZnS:(Cu, Al), ZnSiO₄:Mn, Zn(Ga, Al)₂O₄:Mn, et des combinaisons de ceux-ci.

12. Dispositif d'affichage (200) selon l'une quelconque des revendications 9 à 11, dans lequel le luminophore bleu est choisi dans le groupe constitué de ZnS:(Ag, Al), Y₂SiO₅:Ce, BaMgAl₁₀O₁₇:Eu, et des combinaisons de ceux-ci.

13. Dispositif d'affichage (200) selon l'une quelconque des revendications 9 à 12, dans lequel la couche de luminophore (30) comprend un luminophore rouge dans une proportion allant de 15 à 30 parties en poids, un luminophore vert dans une proportion allant de 30 à 60 parties en poids, et un luminophore bleu dans une proportion allant de 24 à 45 parties en poids.

14. Dispositif d'affichage (200) selon l'une quelconque des revendications 1 à 13, dans lequel le panneau d'affichage (50) comprend des premiers pixels, le panneau électroluminescent (100) comprend des seconds pixels qui sont plus petits que les premiers pixels du panneau d'affichage (50), et les seconds pixels émettent de la lumière indépendamment selon les échelles de gris de premiers pixels correspondants.

15. Dispositif d'affichage (200) selon l'une quelconque des revendications 1 à 14, dans lequel le panneau d'affichage (50) est un panneau d'affichage à cristaux liquides.
